# EUROPEAN PATENT APPLICATION

(11) **EP 3 618 317 A1**
(43) Date of publication of application: **04.03.2020**
(21) Application number: 18791929.5
(22) Date of filing: 27.04.2018
(51) Int. Cl.: H04J 14/00, H04B 10/07

(54) **MESSAGE SENDING METHOD AND MESSAGE RECEIVING METHOD AND APPARATUS**

(30) Priority: 27.04.2017 CN 201710286700
(71) Applicant: ZTE Corporation, Shenzhen, Guangdong 518057 (CN)
(72) Inventor: BI, Jie, Shenzhen Guangdong 518057 (CN)
(74) Representative: Aipex B.V.
(86) International application number: PCT/CN2018/084739
(87) International publication number: WO 2018/196833

(57) **Abstract**

Provided are a message sending method and message receiving method and apparatus. The message sending method includes: determining an operating mode for sending a message, where the operating mode is a mode for sending the message by using a multiplexing manner of one or more of the following Ethernet interfaces: an Ethernet interface having a granularity of 10 Gigabit (G), 40G, or 100G; sending the message according to the determined operating mode.

## Description

### TECHNICAL FIELD

The present disclosure relates to the field of communication technologies, for example, a message sending method and apparatus and a message receiving method and apparatus.

### BACKGROUND

100GBASE-R is a 100 Gigabit (G) Ethernet interface physical layer standard defined in the IEEE 802.3 protocol. Physical layer implementation involves three portions: a Physical Coding Sublayer (PCS), a Physical Medium Attachment (PMA) layer and a Physical Medium Dependent (PMD) layer.

A 40 Gigabit Attachment Unit Interface (XLAUI) and a 100 Gigabit Attachment Unit Interface (CAUI) are additional interfaces of a 40G Ethernet interface and a 100G Ethernet interface defined by the physical layer, respectively. The purposes of defining the XLAUI and the CAUI each is to provide a manner of implementing electrical connections between 40G Ethernet chips and 100G Ethernet chips and between chips and module apparatuses. These two electrical implementation manners are used for most of the electrical interworking between 40G chips and 100G chips.

Multi-link gearbox (MLG) is defined by the international Optical Internetworking Forum (OIF) organization to be a similar function as implemented by the PMA layer in the Ethernet physical layer (PHY). Two versions of MLG exist. Version 1.0 of MLG defines how 10 paths of 10GBASE-R signals converge into a 100GBASE-R signal, and version 2.0 of MLG defines how 20/40 MLG lanes are configured, which can support the aggregation function of 10G Ethernet interfaces and 40G Ethernet interfaces. The MLG function provides an effective method for achieving multiplexing of multiple Ethernet interfaces, fully utilizing the bandwidth of a higher-speed Ethernet interface and fully utilizing the processing capacity of a network processor. The MLG function has a wide range of application scenarios and new commercial needs between data center switches and between aggregation routers.

To implement interworking of high-bandwidth Ethernet interfaces, many large-capacity Ethernet switches or routers use 100G Ethernet interfaces for interworking. 100G Ethernet interfaces are generally implemented in the following two manners.

### Manner 1: 100G Media Access Control (MAC) direct output 100G interface

In this manner, the network processor (NP) end has 100G Ethernet MAC and includes a Reconciliation Sublayer (RS) and a PCS physical layer. In the case of a direct output CAUI-10 interface of an NP chip, the CAUI-10 interface of the NP needs to transition to a CAUI-4 interface through gearbox, and then transceiving is performed through the optical module including the 100G PMD portion. However, transceiving cannot be directly performed in this manner through the 10G/40G Ethernet interface.

### Manner 2: Use of MLG for implementation

With the MLG function, ten paths of independent MAC or two paths of 40G MAC plus two paths of 10G MAC can be aggregated into one path of 100G Ethernet interface for output. However, the disadvantage of this manner is that independent 100G MAC cannot be supported.

### SUMMARY

Embodiments of the present application provide a message sending method and apparatus and a message receiving method and apparatus so as to solve at least the problem in the related art that a 100G MAC direct output 100G Ethernet interface and a 100G Ethernet interface multiplexed by 10G/40G low-speed Ethernet interfaces cannot be supported at the same time.

A message sending method is provided in the present application. The method includes: determining an operating mode for sending a message, where the operating mode is a mode for sending the message by using a multiplexing manner of one or more of following Ethernet interfaces: an Ethernet interface having a granularity of 10 Gigabit (G), 40G, or 100G; and sending the message according to the determined operating mode.

A storage medium is provided by another embodiment of the present application. The storage medium includes a stored program. The program, when executed, is configured to perform the message sending method of the embodiment described above.

A processor is provided by another embodiment of the present application. The processor is configured to execute a program. When executed, the program is configured to perform the message sending method of the embodiment described above.

A message receiving method is provided by another embodiment of the present application. The method includes: determining an operating mode for receiving a message, where the operating mode is a mode for receiving the message by using a multiplexing manner of one or more of following Ethernet interfaces: an Ethernet interface having a granularity of 10 Gigabit (G), 40G, or 100G; and receiving the message according to the determined operating mode.

A message sending apparatus is provided in the present application. The apparatus includes a first determining module and a sending module. The first determining module is configured to determine an operating mode for sending a message, where the operating mode is a mode for sending the message by using a multiplexing manner of one or more of following Ethernet interfaces: an Ethernet interface having a granularity of 10 Gigabit (G), 40G, or 100G. The sending module is configured to send the message according to the determined operating mode.

A message receiving apparatus is provided by another embodiment of the present application. The apparatus includes a second determining module and a second receiving module. The second determining module is configured to determine an operating mode for receiving a message, where the operating mode is a mode for receiving the message by using a multiplexing manner of one or more of following Ethernet interfaces: an Ethernet interface having a granularity of 10 Gigabit (G), 40G, or 100G. The second receiving module is configured to receive the message according to the determined operating mode.

A data center switch is provided by another embodiment of the present application, and includes the message sending apparatus described above and/or the message receiving apparatus described above.

Through the present application, when a message is sent (or received), the message is sent (or received) according to a determined operating mode for sending (or receiving) the message, where the operating mode is a message sending (or receiving) mode with different granularities so that the message is correspondingly sent (or received) by using a multiplexing manner of Ethernet interfaces having the same granularity or different granularities, and thus, the message transmitted through the Ethernet interfaces having the same granularity or different granularities can be transmitted according to the corresponding operating mode without replacing a processing chip for transmitting the message with different granularities. In the embodiments of the present application, the same processing chip can be used for transmitting the message, solving the problem in the related art that a 100G MAC direct output 100G Ethernet interface and a 100G Ethernet interface multiplexed by 10G/40G low-speed Ethernet interfaces cannot be supported at the same time, and improving the message transmission efficiency.

### BRIEF DESCRIPTION OF DRAWINGS

FIG. 1 is a schematic diagram of a message transceiving apparatus using a CAUI-10 interface according to an embodiment of the present application;
FIG. 2 is a schematic diagram of a message transceiving apparatus using an MLG aggregation manner according to an embodiment of the present application;
FIG. 3 is a block diagram illustrating a hardware structure of a router for a message sending method according to an embodiment of the present application;
FIG. 4 is a flowchart of a message sending method according to an embodiment of the present application;
FIG. 5 is a flowchart of a message receiving method according to another embodiment of the present application;
FIG. 6 is a schematic diagram of a message sending apparatus according to an embodiment of the present application;
FIG. 7 is a schematic diagram of a message receiving apparatus according to another embodiment of the present application;
FIG. 8 is a schematic diagram of message transmission modules according to an embodiment of the present application;
FIG. 9 is a schematic diagram of modules in a message sending direction according to an embodiment of the present application;
FIG. 10 is a schematic diagram of message receiving modules according to an embodiment of the present application;
FIG. 11 is a schematic diagram of a message sending method according to an embodiment of the present application; and
FIG. 12 is a schematic diagram of a message receiving method according to an embodiment of the present application.

### DETAILED DESCRIPTION

The present application will be described hereinafter in detail with reference to the drawings and in conjunction with embodiments. If not in collision, the embodiments described herein and the features thereof may be combined with each other.

The terms "first", "second" and the like in the description, claims and above drawings of the present application are used to distinguish between similar objects and are not necessarily used to describe a particular order or sequence.

100G Ethernet interfaces are generally implemented in the following two manners.

### Manner 1: 100G MAC direct output 100G interface

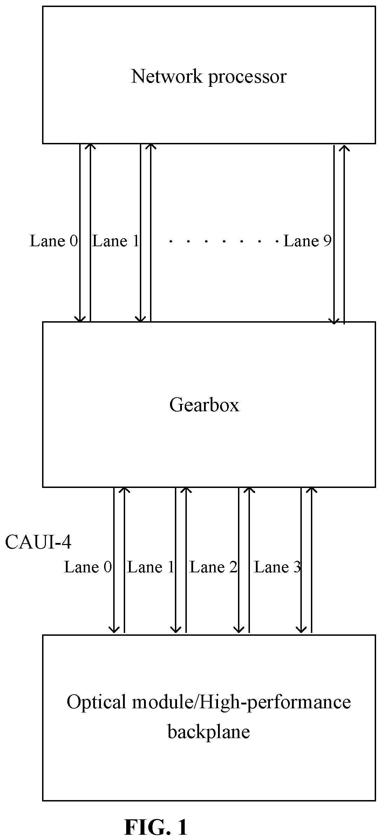

In this manner, the NP end has 100G Ethernet MAC and includes a reconciliation sublayer and a PCS physical layer. The NP chip generally has a direct output CAUI-10 interface or a direct output CAUI-4 interface, and a physical interface of the PMA layer of the 100G Ethernet PHY portion is typically implemented as these two interfaces. CAUI-10 has a total of 10 lanes. Each lane includes a Serializer-Deserializer (serdes) in either direction of the transceiving direction. A typical rate for each lane is 10.3125 Gigabits per second (Gbps) (generally referred to as a 10G rate). The CAUI-4 interface has a total of 4 lanes. Each lane includes a serdes in either direction of the transceiving direction. A typical rate for each lane is 25.78125 Gbps (generally referred to as a 25G rate). A typical transceiving portion apparatus using the CAUI-10 interface is as shown in FIG. 1, the CAUI-10 interface of the NP needs to transition to a CAUI-4 interface through gearbox, and then transceiving is performed through an optical module including the 100G PMD portion (such as a 100G Centum Form Factor Pluggable 4 (CFP4) optical module or a Quad Small Form-factor Pluggable28 (QSFP28) optical module). In this manner, the design and manufacturing cost of the NP chip is high. Moreover, the 10G/40G Ethernet interface cannot be directly used for transceiving in this manner, and for a product, the 10G/40G interface is generally used as a downlink connection for accessing a device, and the 100G interface is generally used as an uplink connection for aggregating devices.

Some MAC chips may also directly output a CAUI-4 interface, but the serdes of the CAUI-4 interface is physically complex and costly, so few Application Specific Integrated Circuits (ASICs) support the CAUI-4 interface. In addition, an optical module (such as the 100G Centum Form Factor Pluggable (CFP)) supporting a CAUI-10 interface may also be directly used for transceiving, but the CFP is large in volume and large in power consumption and requirements for the volume and the heat dissipation capacity of a product are high, so the use is not recommended.

### Manner 2: Use of MLG for implementation

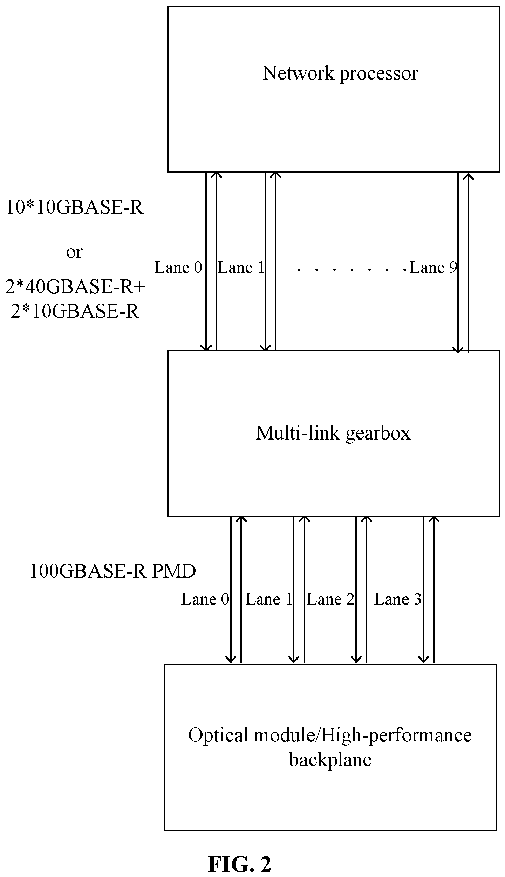

This implementation manner is as shown in FIG. 2. The NP/ASIC end usually includes multiple 10G or 40G Ethernet MAC. With the MLG function, ten paths of independent MAC or two paths of 40G MAC plus two paths of 10G MAC can be aggregated into one path of 100G Ethernet interface for output. The advantage of this manner is that multiple low-speed Ethernet interfaces may be multiplexed into a high-speed 100G Ethernet interface so that the high bandwidth of a 100G interworking link may be fully utilized for inter-device interworking. However, the disadvantage of this manner is that independent 100G MAC cannot be supported. In addition, 10 paths of 10G MAC multiplexing adopts an MLG 1.0 implementation manner, while 40G and 10G MAC multiplexing adopts an MLG 2.0 implementation manner, and the two implementation manners cannot be mixed due to different multiplexing schemes and different internal coding manners.

For ease of description, some nouns or terms referred to in the embodiments of the present application are set forth below.

A lane includes a serdes in either direction of a transceiving direction.

A clock data recovery (CDR) module may recover a line clock according to a serial bit stream inputted to a serdes link.

A message transition module may perform corresponding adaptation and multiplexing according to different configurations of a MAC portion of an NP module.

A block synce module performs link synchronization by identifying information about a header of a 66-bit data block of a link.

A block control module implements a configuration of each component of the transition module.

For an align proc module, an align proc module for multiple lanes has different operating modes under different configurations.

A lane deskew and reorder module achieves synchronization and reordering among lanes according to an align marker of multiple lanes.

A block distribute module performs distribution on blocks of multiple lanes according to a certain configuration.

A lane synce module achieves self-synchronization of multiple lanes according to data block signals of the multiple lanes.

An align lock module is configured for identification of the align marker of the multiple lanes and synchronization among the multiple lanes in a receiving direction.

A lane mux module is provided.

### Embodiment 1

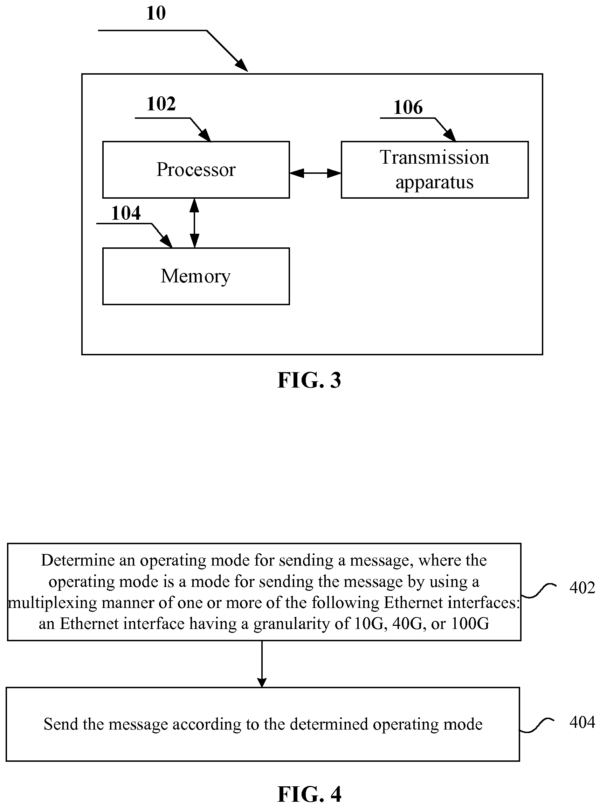

A method embodiment provided by the embodiment 1 of the present application may be executed in a router or other transmission networks. Taking the method embodiment to be executed in the router as an example, FIG. 3 is a block diagram illustrating a hardware structure of a router for a message sending method according to the embodiment. As shown in FIG. 3, a mobile terminal 10 may include one or more (only one is shown in the figure) processors 102 (the processor 102 may include, but is not limited to, a processing apparatus such as a microcontroller unit (MCU) or a field-programmable gate array (FPGA)), a memory 104 configured to store data, and a transmission apparatus 106 implementing a communication function. It may be understood by those skilled in the art that the structure shown in FIG. 3 is merely illustrative, and not intended to limit the structure of the electronic apparatus described above. For example, the terminal 10 may further include more or less components than the components shown in FIG. 3, or has a configuration different from the configuration shown in FIG. 3.

The memory 104 may be configured to store software programs and modules of application software, such as program instructions/modules corresponding to the message sending method in the embodiments of the present application. The processors 102 execute the software programs and modules stored in the memory 104 to perform various functional applications and data processing, that is, to implement the method described above. The memory 104 may include a high-speed random access memory, or may further include a nonvolatile memory such as one or more magnetic storage apparatuses, flash memories or other nonvolatile solid-state memories. In some examples, the memory 104 may include memories which are remotely disposed with respect to the processor 102 and these remote memories may be connected to the mobile terminal 10 via a network. Examples of the above network include, but are not limited to, the Internet, an intranet, a local area network, a mobile communication network and a combination thereof.

The transmission apparatus 106 is configured to receive or send data via a network. Specific examples of the network described above may include a network provided by a communication provider of the terminal 10. In an example, the transmission apparatus 106 includes a router, which may be connected to other network devices via a base station and thus be capable of communicating with the Internet.

A message sending method executed on the preceding mobile terminal is provided in an embodiment. FIG. 4 is a flowchart of the message sending method according to the embodiment of the present application. As shown in FIG. 4, the method includes steps described below.

In step 402, an operating mode for sending a message is determined, where the operating mode is a mode for sending the message by using a multiplexing manner of one or more of the following Ethernet interfaces: an Ethernet interface having a granularity of 10G, 40G, or 100G.

In step 404, the message is sent according to the determined operating mode.

In an embodiment, before the operating mode for sending the message is determined, the method further includes receiving the message.

Through the above steps, the message may be sent according to the determined operating mode for sending the message. In an embodiment, the operating mode is a mode in which the message is correspondingly sent by using a multiplexing manner of Ethernet interfaces having the same granularity or different granularities, and thus the message transmitted through the Ethernet interfaces having the same granularity or different granularities can be transmitted according to the corresponding operating mode without replacing a processing chip for transmitting the message with different granularities; in the embodiment, the same processing chip can be used for transmitting the message, solving the problem in the related art that a 100G MAC direct output 100G Ethernet interface and a 100G Ethernet interface multiplexed by 10G/40G low-speed Ethernet interfaces cannot be supported at the same time, and improving the message transmission efficiency.

In an embodiment, the above steps may, but may not necessarily, be performed by a data center switch or a high-end router.

The above Ethernet interfaces having different granularities or the same granularity may be independent media access control (MAC) layers of an NP, the NP is an NP/ASIC chip and may include independent MAC of 10G/40G/100G, a message may be sent to a message transition module through the NP, and the message transition module starts performing the above steps 402 to 404.

For the embodiment described above, the message transition module may transmit the message, the operating mode of the message transition module is pre-configured by the NP, the configured interface may be a serial management interface (SMI), the manner of transmitting the message includes sending the message and receiving the message, the operating modes of the message transition module may be consistent when the message is sent and when the message is received, and the message transition module may send or receive the message according to the pre-configured operating mode. The message transition module is an important part of the embodiment, and the function of each module in the message transition module is described below.

In an embodiment, the NP may be connected to the message transition module by using multiple lanes (e.g., 10 lanes), and each lane may have a transmission rate of 10G, i.e., the message transition module may transmit the message through multiple lanes (e.g., 100G Ethernet interfaces).

In an embodiment, the step of determining the operating mode for sending the message includes the network processor (NP) determines the operating mode for sending the message according to an external operating demand. In an embodiment, the operating mode is a mode in which the NP configures a message sending module (e.g., the message transition module described above) through an external interface.

In the implementation mode described above, the operating mode for sending the message may be determined according to the external operating demand. In an embodiment, the operating demand may be an operating mode required by a customer or a merchant, and the NP may execute a software program according to the demand inputted by a user to automatically generate a corresponding operating mode so as to send or receive the message according to the operating mode. In an embodiment, when the operating mode of the message is determined, an address of the media access control (MAC) layer of the NP may be acquired in advance, the MAC addresses of different network processors are different, and the MAC addresses in the embodiment may include, but are not limited to, the MAC addresses corresponding to the above-mentioned 10G, 40G, and 100G Ethernet interfaces. Then, the operating mode required to be used may be determined according to the acquired MAC address, and different sizes of message data may be transmitted in different operating modes.

In an embodiment, before the message is received, the method includes configuring the operating mode of the NP and a mode register in the management module, where multiple operating modes may be stored in the mode register in advance, and after the operating mode for sending the message is determined, the content of the operating mode stored in the mode register may be called so that a corresponding message transmission process is configured according to the operating mode.

In an embodiment, the operating mode of the NP and the mode register to be configured described above may be configured once, and in operation, the corresponding operating manner and operating mode may be called according to the acquired MAC address.

In an embodiment, the step of sending the message according to the determined operating mode includes: determining a clock data recovery manner for sending the message, where the clock data recovery manner is a manner for performing clock synchronization on the message to be sent; and sending the message according to the clock data recovery manner and the operating mode.

In an embodiment, in the process of sending the message, it may be determined whether the corresponding operating mode is a gearbox mode. In an embodiment, the gearbox mode may be a message transmission mode of a 100G MAC direct output 100G interface, and in a case where it is determined that the operating mode is the gearbox mode, the messages may be directly transmitted to a synchronization processing position so that synchronization processing is directly performed on the messages and the messages are outputted through the predetermined number of interfaces. In an embodiment, the predetermined number of interfaces may be 4. In an embodiment, in a case where it is determined that the operating mode is not the gearbox mode, the header of a data block of a predetermined threshold (e.g., 66 bits) on the link may be identified for achieving link synchronization.

In an embodiment, before it is determined whether the operating mode is the gearbox mode, recovered clock selection may be performed on input lanes of the NP for synchronously receiving messages and transmitting the synchronously received messages.

In an embodiment, after it is determined that the operating mode is not the gearbox mode and the link synchronization is achieved, it may be determined whether the operating mode is a hybrid multiplexing mode. In an embodiment, the hybrid multiplexing mode may be a multiplexing mode of 40G and 10G Ethernet interfaces, i.e., the message needs to be transmitted by using a transmission mode of multiplexing 10G and 40G Ethernet interfaces. In an embodiment, the hybrid multiplexing mode may include two types of multiplexing modes, i.e., one path of 40G plus six paths of 10G and two paths of 40G plus two paths of 10G. The hybrid multiplexing mode describes a multiplexing mode that includes multiple granularities (e.g., 10G and 40G). In an embodiment, in a case where it is determined that the operating mode is not the hybrid multiplexing mode, the message data may be transmitted through a multiplexing mode of 10 paths of 10G in granularity.

In an embodiment, the multiplexing manner of one or more Ethernet interfaces having the granularity of 10G, 40G, or 100G includes one of: a manner of an independent 100G Ethernet interface; a multiplexing manner of two 40G Ethernet interfaces and two 10G Ethernet interfaces; a multiplexing manner of ten 10G Ethernet interfaces; or a multiplexing manner of one 40G Ethernet interface and six 10G Ethernet interfaces.

In another implementation mode, in a case where it is determined that the operating mode is the hybrid multiplexing mode, a link synce module may be configured to be in an identification synchronization mode in which marker information of multiple lanes for transmitting the message may be identified and synchronization among the lanes is achieved. In an embodiment, in a case where it is determined that the operating mode is not the hybrid multiplexing mode, the link synce module may be configured to be in a lane marker mode in which the above marker information may be inserted into a lOG-granularity message transmission lane. In an embodiment, the marker information may be information, such as a number or a character (e.g., 0/1, a, or b), marking the message.

For the implementation mode described above, the input lanes may be synchronized and reordered according to the marker information; through lane synchronization, the message transmission may be consistent, and the transmitted messages may be integrated into one piece of complete information instead of transmission messages out of order in the lanes; through reordering of the lanes for transmitting the messages, the messages transmitted through the lanes may be integrated and the messages are orderly transmitted to the next interface and conveniently received.

In an embodiment, in the process of transmitting messages, clocks for multiple lanes may be recovered according to a configured operating mode, the rate for transmitting a message in a lane is configured, and the message is sent according to the configured transmission rate.

For the embodiment described above, inputted message data may be distributed to different transmission links according to different transmission granularities, for example, a lOG-granularity link may be distributed to lane 0.1 and lane 0.1 and a 40G-granularity link may be distributed to lane 1.0 and lane 1.1.

After the transmitted message data is transmitted to a fixed interface, a standard module (such as a physical medium attachment (PMA) module) may be used for multiplexing the fixed number of lanes according to a predetermined ratio (such as 20:4) in a polling manner, and a CAUI-4 interface may be physically used for output.

In an embodiment, the standard module may transfer the message to a corresponding 100G physical interface for output through a display module.

In an embodiment, the step of sending the message according to the determined operating mode includes: determining a clock data recovery manner for sending the message, where the clock data recovery manner is performing clock synchronization on the message to be sent; and sending the message according to the clock data recovery manner and the operating mode.

In an embodiment, the step of sending the message according to the determined operating mode includes: determining a clock data recovery manner for sending the message and performing clock synchronization on the message to be sent according to the clock data recovery manner; and sending the message subjected to the clock synchronization according to the operating mode.

For the implementation mode described above, the step of sending the message according to the determined operating mode further includes: determining a parameter for sending the message; and sending the message according to the parameter for sending the message.

In an embodiment, the step of sending the message according to the determined operating mode includes: determining a parameter for sending the message according to the determined operating mode; and sending the message according to the parameter for sending the message.

Through the implementation mode described above, clock synchronization may be performed on message sending through a clock data recovery manner so that messages are sent synchronously and are sent according to corresponding parameters. In an embodiment, the parameters may include the rate at which the message is sent, the bit width at which the message is sent, the flow of sending the message, multiple interfaces and modules through which the message is sent, etc. In this way, the message sending manner may be flexibly adjusted according to multiple parameters so that message data is transmitted. In addition, in the embodiment, the chip for transmitting the message does not need to be replaced, the message may be flexibly transmitted in a message transmission manner adjusted by adjusting the operating mode of the mode register, and different message data can be conveniently transmitted according to different NPs.

A storage medium is provided by another embodiment of the present application. The storage medium includes a stored program. The program, when executed, is configured to perform any message sending method of the embodiments described above.

A processor is provided by another embodiment of the present application. The processor is configured to execute a program. When executed, the program is configured to perform any message sending method of the embodiments described above.

In the embodiment, the storage medium may be configured to store program codes for performing the steps described below.

An operating mode for sending a message is determined, where the operating mode is a mode for sending the message by using a multiplexing manner of one or more of the following Ethernet interfaces: an Ethernet interface having a granularity of G, 40G, or 100G.

The message is sent according to the determined operating mode.

In an embodiment, before the operating mode for sending the message is determined, the method further includes receiving the message.

In the embodiment, the storage medium may include, but is not limited to, any one of a USB flash disk, a read-only memory (ROM), a random access memory (RAM), a mobile hard disk, a magnetic disk, an optical disk or another medium capable of storing program codes.

A processor is further provided in the embodiments of the present application. The processor is configured to execute programs. When executed, the programs are configured to perform the method described above.

In the embodiment, the programs described above are configured to perform the steps described below.

An operating mode for sending a message is determined, where the operating mode is a mode for sending the message by using a multiplexing manner of one or more of the following Ethernet interfaces: an Ethernet interface having a granularity of 10G, 40G, or 100G.

The message is sent according to the determined operating mode.

In an embodiment, before the operating mode for sending the message is determined, the method further includes receiving the message.

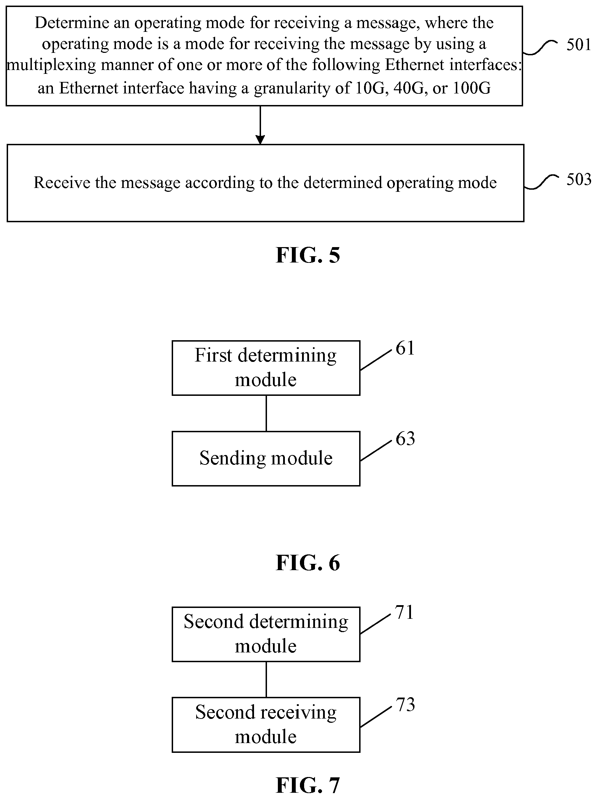

FIG. 5 is a flowchart of a message receiving method according to the present application. As shown in FIG. 5, the method includes steps 501 and 503.

In step 501, an operating mode for receiving a message is determined, where the operating mode is a mode for receiving the message by using a multiplexing manner of one or more of the following Ethernet interfaces: an Ethernet interface having a granularity of 10G, 40G, or 100G.

In step 503, the message is received according to the determined operating mode.

Through the above steps, the operating mode for receiving the message may be determined firstly, the message is received according to the determined operating mode, Ethernet interfaces having different granularities correspond to different operating modes, and the operating mode for receiving the message may be flexibly adjusted for receiving the message. In the embodiment, a processing chip for transmitting the message with different granularities does not need to be replaced. In the embodiment, the same processing chip can be used for transmitting the message, solving the problem in the related art that a 100G MAC direct output 100G Ethernet interface and a 100G Ethernet interface multiplexed by 10G/40G low-speed Ethernet interfaces cannot be supported at the same time, and improving the message transmission efficiency.

In an embodiment, the above steps may, but may not necessarily, be performed by a data center switch or a high-end router.

The above Ethernet interfaces having different granularities may be independent media access control (MAC) layers of an NP. The NP is an NP/ASIC chip and may include independent MAC of 10G/40G/100G. The message may be received through the implementation mode described above.

In an embodiment, the NP may be connected to the message transition module by using multiple lanes (e.g., 10 lanes), and each lane may have a transmission rate of 10G, i.e., the message transition module may transmit the message through multiple lanes (e.g., 100G Ethernet interfaces).

In an embodiment, the step of determining the operating mode for receiving the message includes the network processor (NP) determines the operating mode for receiving the message according to an external operating demand, where the operating mode is a mode in which the NP configures a message receiving module (e.g., the message transition module described above) through an external interface.

In the implementation mode described above, the operating mode for receiving the message may be pre-configured through the NP. In an embodiment, the configuration manner is a configuration through an external operating demand, the operating demand may be the demand from a user for sending a message, and according to the operating demand, the NP performs configuration (including an operating mode for transmitting the message) on a message transition module for transmitting the message. In an embodiment, the operating modes for receiving the message and sending the message may be consistent, i.e., the message is received or sent through the same operating mode. In addition, the operating mode of the message transition module may be configured through an SMI interface. In an embodiment, when the operating mode is configured, an address of the media access control (MAC) layer of the NP may be acquired in advance, and MAC addresses of different network processors are different. The MAC addresses in the embodiment may include, but are not limited to, the MAC addresses corresponding to the 10G, 40G, and 100G Ethernet interfaces. Then, the operating mode used for receiving the message may be determined according to the acquired MAC address, and different sizes of message data may be transmitted in different operating modes.

In another implementation mode, the step of receiving the message according to the determined operating mode includes: determining a clock data recovery manner for receiving the message, where the clock data recovery manner is a manner for performing clock synchronization on the received message; and receiving the message according to the clock data recovery manner and the operating mode.

In an embodiment, the step of receiving the message according to the determined operating mode includes: determining a clock data recovery manner for receiving the message and performing clock synchronization on the received message according to the clock data recovery manner; and receiving the message according to the operating mode.

In an embodiment, the step of receiving the message according to the determined operating mode further includes: determining a parameter for receiving the message; and receiving the message according to the parameter for receiving the message.

In an embodiment, the step of receiving the message according to the determined operating mode includes: determining a parameter for receiving the message according to the determined operating mode; and receiving the message according to the parameter for receiving the message.

Through the implementation mode described above, the messages may be synchronously received by using a clock data recovery manner, and the messages may be received according to different parameters for receiving the messages, where the parameters may include the rate, the bit width and the like for receiving the messages.

In an embodiment, the operating mode of the NP and the mode register to be configured may be configured once, and in operation, the corresponding operating mode may be called according to the acquired MAC address.

In an embodiment, when the messages are received, the message transition module may be configured to be in a demultiplexing mode corresponding to the operating mode for sending the messages in the above implementation, and line clock data recovery needs to be performed on the CAUI-4 interface inputted through the display interface in advance, so that transmission clocks of multiple transmission lanes are consistent when the message transition module receives the messages.

In an embodiment, the messages may be received according to another predetermined ratio (e.g., 4:20), in the receiving process, the transmitted messages may be demultiplexed through a standard module, the demultiplexing process is the reverse of the multiplexing mode of the above-mentioned embodiment, the messages of multiple input lanes are demultiplexed into multiple lanes from low to high in turn in sequence, and the transmission rate of each lane may be 5G.

In an embodiment, in the process of receiving the messages, it may be determined whether the corresponding operating mode is a gearbox mode. In an embodiment, the gearbox mode may be the message transmission mode of a 100G MAC direct output 100G interface, and in a case where it is determined that the operating mode is the gearbox mode, the messages may be directly transmitted to a synchronization processing position so that synchronization processing is directly performed on the messages and the messages are outputted through the predetermined number of interfaces. In an embodiment, the predetermined number of interfaces may be 4. In an embodiment, in a case where it is determined that the operating mode is not the gearbox mode, the header of a block of a predetermined threshold (e.g., 66 bits) on the link may be identified for achieving link synchronization.

In an embodiment, before it is determined whether the operating mode is the gearbox mode, an NP input lane may be subjected to recovered clock selection for synchronously receiving messages and transmitting the synchronously received messages.

In an embodiment, after it is determined that the operating mode is not the gearbox mode and the link synchronization is achieved, it may be determined whether the operating mode is a hybrid demultiplexing mode. In an embodiment, the hybrid demultiplexing mode may be a demultiplexing mode of 40G and 10G Ethernet interfaces, i.e., the message needs to be transmitted by using a transmission mode of multiplexing 10G and 40G Ethernet interfaces. In an embodiment, the hybrid demultiplexing mode may include two types of demultiplexing modes, i.e., one path of 40G plus six paths of 10G and two paths of 40G plus two paths of 10G. The hybrid demultiplexing mode describes a demultiplexing mode that includes multiple granularities (e.g., 10G and 40G). In an embodiment, in a case where it is determined that the operating mode is not the hybrid demultiplexing mode, the message data may be transmitted through a demultiplexing mode of 10 paths of 10G in granularity.

In an embodiment, the multiplexing manner of one or more of the following Ethernet interfaces: an Ethernet interface having the granularity of 10G, 40G, or 100G includes one of: a manner of an independent 100G Ethernet interface; a multiplexing manner of two 40G Ethernet interfaces and two 10G Ethernet interfaces; a multiplexing manner of ten 10G Ethernet interfaces; or a multiplexing manner of one 40G Ethernet interface and six 10G Ethernet interfaces.

In another implementation mode, in a case where it is determined that the operating mode is the hybrid demultiplexing mode, a link synce module may be configured to be in an identification synchronization mode in which marker information of multiple lanes for transmitting the message may be identified so that synchronization among the lanes is achieved. In an embodiment, in a case where it is determined that the operating mode is not the hybrid demultiplexing mode, the link synce module may be configured to be in a lane marker mode in which the above marker information may be inserted into a lOG-granularity message transmission lane.

For the implementation mode described above, the input lanes may be synchronized and reordered according to the marker information; through lane synchronization, the message transmission may be consistent, and the transmitted messages may be integrated into one piece of complete information instead of transmission messages out of order in the lanes; through reordering of the lanes for transmitting the messages, the messages transmitted through the lanes may be integrated and the messages are orderly transmitted to the next interface and conveniently received.

In an embodiment, in the process of transmitting messages, clocks for multiple lanes may be recovered according to a configured operating mode, the rate for transmitting a message in a lane is configured, and the message is sent according to the configured transmission rate.

Through the implementation mode described above, after message information sent by a new NP is acquired, the MAC address of the NP may be acquired again so that the operating mode is adjusted again according to the MAC address to send the message. In this way, the implementation modes described above may be integrated into a same module (such as the message transition module), and after the NPs having different MAC addresses are accessed, the chip for transmitting the message does not need to be replaced, and the message may be flexibly transmitted in a message transmission manner adjusted by adjusting the operating mode of the mode register, and different message data can be conveniently transmitted according to different NPs.

For the implementation mode described above, the multiplexing manner of one or more of the following Ethernet interfaces: an Ethernet interface having the granularity of 10G, 40G, or 100G includes one of: a manner of an independent 100G Ethernet interface; a multiplexing manner of two 40G Ethernet interfaces and two 10G Ethernet interfaces; a multiplexing manner of ten 10G Ethernet interfaces; or a multiplexing manner of one 40G Ethernet interface and six 10G Ethernet interfaces.

A storage medium is provided by another embodiment of the present application. The storage medium includes a stored program. The program, when executed, is configured to perform any message receiving method of the embodiments described above.

A processor is provided by another embodiment of the present application. The processor is configured to execute a program. When executed, the program is configured to perform any message receiving method of the embodiments described above.

In the embodiment, the storage medium may be configured to store program codes for performing the steps described below.

An operating mode for receiving a message is determined, where the operating mode is a mode for receiving the message by using a multiplexing manner of one or more of the following Ethernet interfaces: an Ethernet interface having a granularity of 10G, 40G, or 100G.

The message is received according to the determined operating mode.

In the embodiment, the storage medium may include, but is not limited to, any one of a USB flash disk, a read-only memory (ROM), a random access memory (RAM), a mobile hard disk, a magnetic disk, an optical disk or another medium capable of storing program codes.

A processor is further provided in the embodiments of the present application. The processor is configured to execute programs. When executed, the programs are configured to perform any method described above.

In the embodiment, the programs described above are configured to perform the steps described below.

An operating mode for receiving a message is determined, where the operating mode is a mode for receiving the message by using a multiplexing manner of one or more of the following Ethernet interfaces: an Ethernet interface having a granularity of 10G, 40G, or 100G.

The message is received according to the determined operating mode.

For specific examples in the embodiment, reference may be made to the examples described in the above embodiments and implementation modes, and the examples will not be repeated in the embodiment.

From the description of the implementation modes described above, it will be apparent to those skilled in the art that the methods in the embodiments described above may be implemented by software plus a necessary general-purpose hardware platform, or may of course be implemented by hardware. Based on this understanding, the solution provided by the present application substantially, or the part contributing to the related art, may be embodied in the form of a software product. The computer software product is stored in a storage medium (such as a ROM/RAM, a magnetic disk or an optical disk) and includes several instructions for enabling a terminal device (which may be a mobile phone, a computer, a server or a network device) to perform the methods according to each embodiment of the present application.

A message sending apparatus is further provided in the embodiment. The apparatus is configured to implement the embodiments and implementation modes described above. What has been described will not be repeated. As used below, the term "module" may be software, hardware or a combination thereof capable of implementing predetermined functions. The apparatus described below in the embodiments is implemented by software in an embodiment, but implementation by hardware or by a combination of software and hardware is also possible and conceived.

The various modules described above may be implemented by software or hardware. Implementation by hardware may, but may not necessarily, be performed in the following manner: the various modules described above are located in a same processor or located in their respective processors in any combination form.

FIG. 6 is a schematic diagram of a message sending apparatus according to the present application. As shown in FIG. 6, the apparatus includes a first determining module 61 and a sending module 63. The first determining module 61 is configured to determine an operating mode for sending a message, where the operating mode is a mode for sending the message by using a multiplexing manner of one or more Ethernet interfaces having a granularity of 10 G, 40G, or 100G. The sending module 63 is configured to send the message according to the determined operating mode.

In an embodiment, the apparatus further includes a first receiving module configured to receive the message before the operating mode for sending the message is determined.

Through the above embodiments, the message may be sent according to the determined operating mode, where the first determining module 61 may determine the operating mode for sending the message after the message is received so that the message is correspondingly sent according to a multiplexing manner of Ethernet interfaces having the same granularity or different granularities and the sending module 63 sends the received message, so that the message transmitted through the Ethernet interfaces having the same granularity or different granularities can be transmitted according to the corresponding operating mode without replacing a processing chip for transmitting the message with different granularities. In the embodiment, the same processing chip can be used for transmitting the message, solving the problem in the related art that a 100G MAC direct output 100G Ethernet interface and a 100G Ethernet interface multiplexed by 10G/40G low-speed Ethernet interfaces cannot be supported at the same time, and improving the message transmission efficiency.

In an embodiment, the first determining module includes: a first determining unit, which is configured to determine an operating mode configured by a network processor (NP) through an external interface as the operating mode for sending the message.

A message receiving apparatus is further provided in the embodiment. The apparatus is configured to implement the embodiments and implementation modes described above. What has been described will not be repeated. As used below, the term "module" may be software, hardware or a combination thereof capable of implementing predetermined functions. The apparatus described below in the embodiments is implemented by software in an embodiment, but implementation by hardware or by a combination of software and hardware is also possible and conceived.

In an embodiment, the various modules described above may be implemented by software or hardware. Implementation by hardware may, but may not necessarily, be performed in the following manner: the various modules described above are located in the same processor or located in their respective processors in any combination form.

FIG. 7 is a schematic diagram of a message receiving apparatus according to the present application. As shown in FIG. 7, the apparatus includes a second determining module 71 and a second receiving module 73. The second determining module 71 is configured to determine an operating mode for receiving a message, where the operating mode is a mode for receiving the message by using a multiplexing manner of one or more Ethernet interfaces having a granularity of 10 G, 40G, or 100G The second receiving module 73 is configured to receive the message according to the determined operating mode.

Through the above embodiment, the second determining module 71 may determine the operating mode for receiving the message firstly, and the second receiving module 73 receives the message according to the determined operating mode. Different Ethernet interfaces correspond to different operating modes, and the operating mode for receiving the message may be flexibly adjusted for receiving the message. A processing chip for transmitting the message with different granularities does not need to be replaced. In the embodiment, the same processing chip can be used for transmitting the message, solving the problem in the related art that a 100G MAC direct output 100G Ethernet interface and a 100G Ethernet interface multiplexed by 10G/40G low-speed Ethernet interfaces cannot be supported at the same time, and improving the message transmission efficiency.

In an embodiment, the second determining module includes: a second determining unit, which is configured to determine an operating mode configured by a network processor (NP) through an external interface as the operating mode for receiving the message, where the operating mode is a mode in which the NP configures a message receiving module through an external interface.

A data center switch is provided by another embodiment of the present application, and includes the message sending apparatus described in the above embodiments and/or the message receiving apparatus described in the above embodiments.

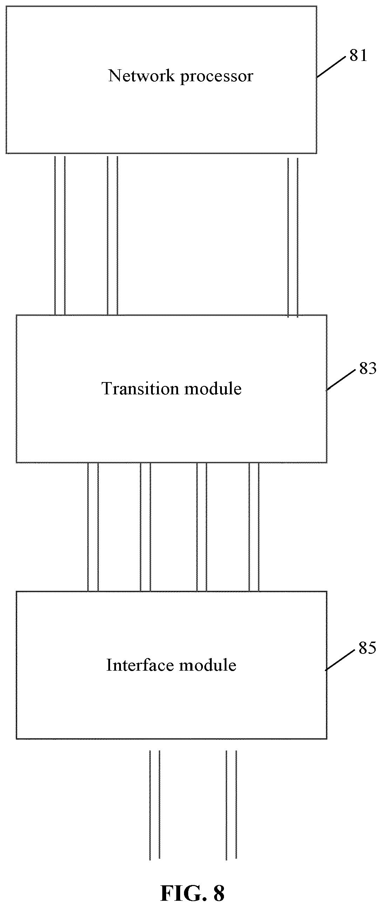

FIG. 8 is a schematic diagram of message transmission modules according to an embodiment. As shown in FIG. 8, the modules include: a network processor 81, a transition module 83 (i.e., the message transition module in the above embodiments) and an interface module 85. The network processor 81 may send messages to the transition module 83, the transition module 83 may determine an operating mode for transmitting the messages according to the MAC addresses of different network processors 81, and the messages are outputted through a unified output interface according to different operating modes. When the network processor 81 transmits the messages to the transition module 83, fixed message data (such as message data with the size of 100G) may be transmitted through 10 lanes (including lane 0 to lane 9), and when the transition module 83 transmits the messages to the interface module 85, the messages may be transmitted to the interface module 85 through 4 lanes (including lane 0 to lane 3).

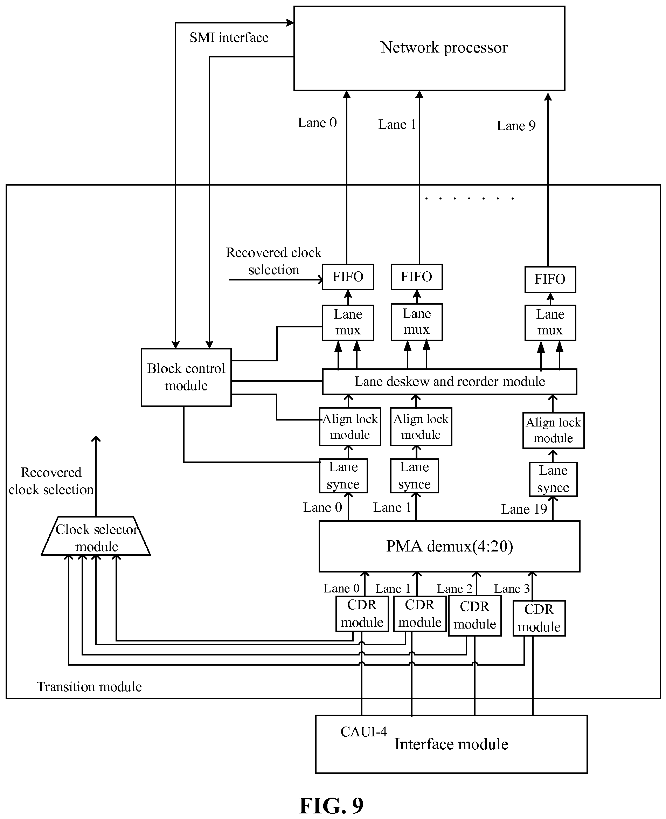

FIG. 9 is a schematic diagram of modules in a message sending direction according to an embodiment. As shown in FIG. 9, messages are sent to clock data recovery modules (CDRs) through an NP, the CDR modules transmit the messages to Block synce modules, the messages are transmitted to Align proc modules through the Block synce modules, the messages are transmitted to a Lane deskew and reorder module through the Align proc modules and then to a First Input First Output (FIFO) module, and the messages may then be transmitted to Block distribute modules. In an embodiment, messages outputted by the transition module may be sent to the interface module over four lanes according to a predetermined ratio through the Physical Medium Attachment (PMA).

In an embodiment, the NP module may be an NP/ASIC chip and includes independent MAC of 10G/40G/100G. 10 lanes are used between the NP module and a subsequent message transition module, and the rate of each lane is 10G.

A transition module is a core module of the embodiment, and may be subjected to corresponding adaptation and multiplexing according to different configurations of a MAC portion of the NP module. The module provides 4 lanes for output to a subsequent interface module, and the rate of each lane is 25G.

The interface module includes two physical sublayers, i.e., PMA and PMD, which ultimately provide a 100G Ethernet physical interface for output.

The present application needs to provide description about two directions in which blocks are sent and received by the NP module respectively. The operating path through which the NP sends the messages is shown in FIG. 9, and the block sending portion has different processing processes along with different configurations of the NP: 10*10GBASE-R is configured for the NP module for output (10 paths of 10G MAC for output), the transition module is configured to be in a 10*10GBASE-R multiplexing mode, and at this time, input lanes 0 to 9 each correspond to one path of 10GBASE-R signal. Lane 0 is taken as an example. Lane 0 first enters the CDR module inside the transition module. The CDR module is a clock data recovery module that may recover a line clock according to the serial bit stream of an inputted differential signal (serdes in the embodiment) link. The line clock is the reference clock when the NP sends lane data. Ten lanes enter the CDR modules to output recovered clocks to a clock selector module inside the transition module, and the clock selector module selects the recovered clock of one lane for use by a subsequent First Input First Output (FIFO) module so as to achieve synchronization of the lane link sending on the NP side and the lane link output from the transition module.

Lane 0 passes through the CDR module and then enters the block synce module, and the block synce module achieves 10GBASE-R link synchronization by identifying the header of a 66-bit block on the 10GBASE-R link.

Sent blocks pass through the block synce modules and then enter the align proc modules, and the align proc modules have different operating manners according to different output links of the NP module. When 10*10GBASE-R output link is configured for the NP, the block control module configures the align proc modules to be in an align add mode in which the align proc modules insert align markers into inputted 10G lanes. An align marker is used for identification of a 10G lane and synchronization among links, and the inserting manner is consistent with the rule defined in the 802.3 standard, i.e., insertion is performed every 16383 66-bit data blocks. A value of the align marker has different definitions according to different operating modes, and in the 10-path 10GBASE-R multiplexing manner, the value of the align marker is consistent with the definition in table 1 in the MLG 1.0 standard.

The blocks pass through the align proc modules and then enter the lane deskew and reorder module. The lane deskew and reorder module achieves functions of synchronization and reordering among lanes according to align markers inserted to the multiple lanes, and for the operating mode of 10*10GBASE-R multiplexing, mainly keeps the blocks sent by the multiple lanes synchronized.

The subsequent FIFO modules mainly achieve rate matching of different clock domains, so that clock synchronization is kept between the links multiplexed and outputted by the transition module and any one of ten 10GBASE-R links inputted from the NP module, and partial demands of synchronous Ethernet (Synch-E) for clock transmission are further met.

The message blocks subjected to adaptation by the FIFOs enter block distribute modules to be distributed according to a 66-bit block. Each block distribute module distributes a block of an input lane to two output lanes in a polling manner. The two output lanes are labeled as lane x.y, x denotes an input lane number and y denotes an output sub-lane number. In a 10*10GBASE-R multiplexing mode, input lane 0 is distributed to lane 0.0 and lane 0.1; input lane 1 is distributed to lane 1.0 and lane 1.1, and so on; thus, ten 10G input lanes are distributed to form 20 lanes for output with a rate of 5G for a single output lane. The 20 lanes of 5G output links may therefore interface with 20 lanes of PMA of the 100GBASE-R physical layer defined by the 802.3 standard, and a difference from the standard PMA is that the definition of a value of the align marker inserted on the link is different.

The subsequent module uses the 20:4 PMA multiplexing module of the 802.3 standard to multiplex the 20 lanes of 5G input links into 4 paths of 25G output links, and the electrical implementation may use a CAUI-4 output implementation manner. The multiplexing manner is that blocks of 5 consecutive lanes starting from lane 0.0 are multiplexed onto multiple 25G output lanes from low to high in an interleaving manner. For example, lane 0.0, lane 0.1, lane 1.0, lane 1.1 and lane 2.0 are multiplexed onto 25G lane 0; lane 2.1, lane 3.0, lane 3.1, lane 4.0 and lane 4.1 are multiplexed onto 25G lane 1, and so on.

A block control module in the transition module achieves a functional configuration of other modules so as to meet requirements of different adaptation and multiplexing manners of blocks. The block control module is managed by an NP through a standard serial management interface (SMI). Functional configurations and state monitoring of the align proc module, lane deskew and reorder module, FIFO module and block distribute module inside the transition module are achieved through the block control module.

In this operating mode, multiplexing into a 100G CAUI-4 interface for output is performed through the transition module, transition into a corresponding 100G physical interface for output is performed through a subsequent interface module, and the interface module may be implemented by using a standard 100G optical module, such as including 100GBASE-SR4/LR4/ER4 and another interface for output, or a physical layer (PHY) chip supporting 100GBASE-KR4 is used for achieving 25G serdes electrical interface interworking of a backplane inside a product, and a backplane bandwidth having a larger capacity is thereby achieved.

In another message transmission manner, one path of 40G plus six paths of 10G or two paths of 40G plus two paths of 10G is configured for the NP for output, and the transition module may be configured to be in a multiplexing mode of one path of 40G plus six paths of 10G or two paths of 40G plus two paths of 10G, respectively. The two modes are basically consistent in multiplexing manner. One path of 40G plus six paths of 10G is taken as an example, and in this mode, a 40G XLAUI interface is configured for the NP input lanes 0 to 3 for input, and 10GBASE-R is still configured for lanes 4 to 9 for input.

As described in the above embodiment, after ten lanes enter the CDR module to output the recovered clocks to the clock selector module, the clock selector module selects the recovered clock of one lane for use by the subsequent FIFO.

The message blocks pass through the CDR modules and then enter the block synce modules, and synchronization of multiple 40GBASE-R links and multiple 10GBASE-R links is achieved, respectively. The message blocks may then enter the align proc modules. The NP has inserted an align marker to lanes 0 to 3 corresponding to a 40G link, so in the multiplexing mode of one 40 G plus six 10G, the block control module configures the align proc modules corresponding to lanes 0 to 3 to be in a marker identification mode for identifying the align marker of lanes 0 to 3. Align proc modules corresponding to lanes 4 to 9 of 10GBASE-R are configured to be in an align add mode and insert align marker information into the 10G input lanes. The align marker information needs to be uniformly distributed and defined with the align marker information inserted into the 40G link, and may be uniformly distributed and defined directly according to table 1 in the MLG 2.0 standard.

The blocks pass through the align proc modules and then enter a lane deskew and reorder module which achieves functions of synchronization and reordering among multiple lanes. For 40G lanes, synchronization and reordering among multiple lanes can be achieved. For 10G lanes, blocks sent by multiple lanes are mainly kept synchronized.

After the rate matching is achieved by the FIFO modules, the block distribute modules distribute the message blocks, and the distribution manner is the same as or similar to that in the mode described in the above-mentioned embodiment and differs in different output lanes to which the message blocks are distributed. For a 40G link, each input lane is distributed to output lane x.y and output lane (x+2).y, for example, lane 0 is distributed to output lane 0.0 and output lane 2.0, lane 1 is distributed to lane 0.1 and lane 2.1, and so on; for a 10G link, distribution is consistent with the previous distribution, i.e., distribution to output lane x.y and lane x.(y+1) links. Therefore, in the mode of one path of 40G plus six paths of 10G, twenty 5G lanes are still distributed to, the 40G link is distributed to lanes 0 to 7 among the output 20 lanes, and the remaining six paths of 10G are distributed to lanes 8 to 19. However, in the multiplexing mode of two paths of 40G plus two paths of 10G, a difference for 40G and 10G merely lies in the number of distributed output lanes, that is, two 40G links are distributed to lanes 0 to 15 among the 20 output lanes, the remaining two paths of 10G are distributed to lanes 16 to 19, and others are completely consistent.

A standard 20:4 PMA multiplexing module and an interface module used subsequently are consistent with those in the embodiment described above, that is, the 20 lanes of 5G links inputted through the PMA module are multiplexed into the CAUI-4 interface for output and finally transition through the interface module to the corresponding 100G physical interface for output.

In another implementation mode, a CAUI-10 interface is configured for the NP module for output, and the transition module is configured to be in a gearbox mode of CAUI-10 to CAUI-4. Most modules inside the transition module have the same configuration in this mode as that in the mode of the above embodiment, except that the block synce module is configured to be in a straight-through state and that the align proc module is configured to be in a marker identification mode and is only used for identifying multiple lanes of CAUI-10 since the NP has inserted align marker information into the multiple lanes of the CAUI-10 interface, that is, twenty 5G lanes are formed through distribution by the block distribute module, and the 20 lanes are multiplexed through a standard 20:4 PMA multiplexing module into a standard CAUI-4 interface for output and finally transition through the interface module to a corresponding 100G physical interface for output.

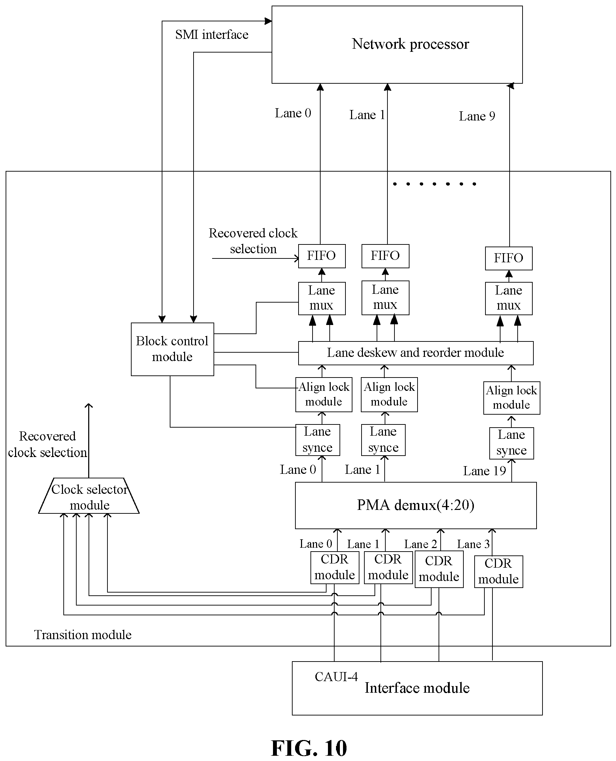

FIG. 10 is a schematic diagram of message receiving modules according to an embodiment. As shown in FIG. 10, a processing process in a message receiving direction is the reverse of the processing process in the message sending direction, and the processing processes are configured as follows according to different NPs.

In an embodiment, 10*10GBASE-R is configured for an NP for input, a transition module is configured to be in a 10*10GBASE-R demultiplexing mode, a CAUI-4 interface inputted by the interface module firstly enters a CDR module for line clock data recovery, and any one of the four paths of recovered clocks is selected according to the configuration as a line clock sent to the NP by the transition module for achieving clock synchronization between the CAUI-4 input and the NP side input.

Four input lanes pass through CDR modules and then enter a standard PMA module for 4:20 demultiplexing. The demultiplexing process is the reverse of multiplexing, multiple input lanes are demultiplexed in turn from low to high onto lanes 0 to 19, and the rate of each lane among the lanes 0 to 19 is 5G. For example, 25G input lane 0 is demultiplexed to lane 0.0, lane 0.1, lane 1.0, lane 1.1 and lane 2.0, and 25G lane 1 is demultiplexed to lane 2.1, lane 3.0, lane 3.1, lane 4.0 and lane 4.1, and so on.

After being demultiplexed by the PMA module, multiple lanes respectively enter lane sync modules, and the lane sync module can synchronize the sent message blocks in the sending lanes.

In an embodiment, the message blocks are synchronized and then may enter align lock modules, where an align lock module functions similarly to the align proc module in the sending portion and is used for identification of align marker information on lane 0 to lane 19 and synchronization among multiple lanes.

In an embodiment, blocks are identified by the align proc modules and then enter a lane deskew and reorder module that functions as described in the above embodiment and is mainly used for synchronization and reordering of multiple lanes among lanes 0 to 19. For the reordering function, it is mainly considered that a CAUI-4 interface inputted by the interface module may have line order exchange, which leads to a fact that 20 lanes demultiplexed from the PMA are not necessarily arranged in an order from low to high according to align markers, and therefore the lane deskew and reorder module needs to achieve rearrangement in an order from low to high according to the align markers, so that the order consistent with the order in which the NP sending end sends the multiple lanes is ensured. Lane numbers are defined by using lane x.y for the 20 lanes subjected to reordering, where x and y are defined as in the sending portion, i.e., lane 0.0 for the first lane, lane 0.1 for the second lane, and so on.

Then, lane mux modules may be entered, and in a 10*10GBASE-R demultiplexing mode, a lane mux module is configured to enable two adjacent lanes to be multiplexed in order, that is, lane 0.0 and lane 0.1 are multiplexed to lane 0, lane 1.0 and lane 1.1 are multiplexed to lane 1, and so on; therefore, the 20 lanes are multiplexed and restored into 10 paths of 10GBASE-R signals, and the 10GBASE-R signals are outputted after rate adaptation is achieved through subsequent FIFOs.

In another implementation mode, one path of 40G plus six paths of 10G or two paths of 40G plus two paths of 10G is configured for the NP for output,, and the transition module is configured to be in a demultiplexing mode of one path of 40G plus six paths of 10G or two paths of 40G plus two paths of 10G: most configurations in the transition module in this mode is the same as the configuration in the mode of the above implementation mode, and input CAUI-4 interfaces, in turn, pass through CDR modules, a PMA module to be demultiplexed to lanes 0 to 19, lane synce modules, align lock modules, and a lane deskew and reorder module for synchronization and line order rearrangement among 20 lanes. The difference from the operating mode in the above-mentioned embodiment is as follows: when the demultiplexing mode of one path of 40G plus six paths of 10G is configured, the reordered lane 0.0 to lane 3.1 correspond to a 40GBASE-R link, and lane 4.0 to lane 9.1 correspond to six 10GBASE-R links; when the demultiplexing mode of two paths of 40G plus two paths of 10G is configured, the reordered lane 0.0 to lane 3.1 correspond to a first 40GBASE-R link, lane 4.0 to lane 7.1 correspond to a second 40GBASE-R link, and lane 8.0 to lane 9.1 correspond to two 10GBASE-R links.

Then, lane mux modules may be entered. The multiplexing manner for the 10GBASE-R link is the same as the multiplexing manner in the above embodiment, that is, lane multiplexing corresponding to the 10GBASE-R lane is to perform multiplexing on two adjacent lanes in order, and lane multiplexing corresponding to the 40GBASE-R lane is to perform multiplexing on every two lanes according to lane x.y and lane (x+2).y, which is the reverse of the process of a block distribute module on a 40GBASE-R sending path. For example, lane 0.0 and lane 2.0 are multiplexed to lane 0; lane 0.1 and lane 2.1 are multiplexed to lane 1, and so on; finally, 10 paths of lanes with a 10G rate are restored into. When the demultiplexing mode of one path of 40G plus six paths of 10G is configured, lane 0 to lane 3 correspond to a 40GBASE-R link, and lane 4 to lane 9 correspond to six 10GBASE-R links; when the demultiplexing mode of two paths of 40G plus two paths of 10G is configured, lane 0 to lane 3 correspond to the first 40GBASE-R link, lane 4 to lane 7 correspond to the second 40GBASE-R link, and lane 8 to lane 9 correspond to two 10GBASE-R links. Then, the NP module is outputted to after rate adaptation is achieved through the subsequent FIFOs.

In another implementation mode, a CAUI-10 interface is configured for the network processor (NP) for input, and the transition module is configured to be in a gearbox mode of CAUI-4 to CAUI-10. Most modules inside the transition module have the same configuration in this mode as that in the mode of the above embodiment, except that the lane synce module is configured to be in a straight-through state and that the inputted CAUI-4 interfaces may directly enter the PMA module for 4:20 demultiplexing. The operating mode configuration of the other modules is the same as the configuration in the mode of the above embodiment, and finally, 20 lanes are multiplexed every two lanes through the lane mux modules in turn into 10 lanes to form a CAUI-10 interface and then are outputted to the NP module after rate adaptation is achieved through subsequent FIFOs.

According to the above embodiments, flexible Ethernet message transceiving modules can be provided, a gearbox mode can be configured to achieve the transition from a CAUI-10 interface to a CAUI-4 interface, and an MLG mode can also be supported to achieve multiplexing of 10G MAC and 40G MAC, so that the multiplexing of one or more Ethernet interfaces having three granularities of 10G, 40G or 100G is achieved over a 100G interface, and the large bandwidth of 100G PMD and the message processing capability of a network processor or forwarding chip inside a product are fully utilized, which are particularly suitable for application on data center switches and high-end routers.

In addition, multiple functional modules in the transition module in the present application can be managed and configured by using the serial management interface (SMI) of the NP, the dynamic switching function between different configurations can be achieved, the problem that boards having different ASIC chips need to be replaced or different versions of field programmable gate arrays (FPGAs) need to be reloaded when different modes are configured is solved, and the time from service configuration change to service validation is greatly shortened. The modules of the design solution are basically universal, so that the development complexity is effectively simplified, and the product implementation cost is reduced.

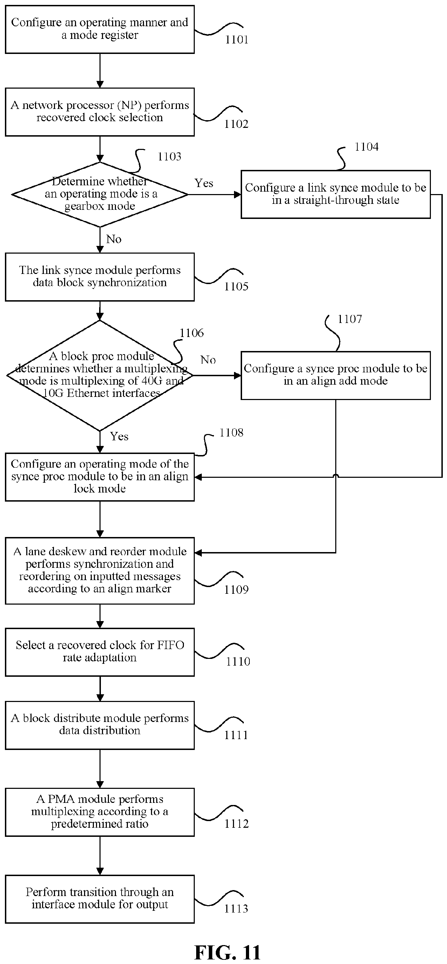

FIG. 11 is a schematic diagram of a message sending method according to an embodiment. As shown in FIG. 11, the method includes steps described below.

In step 1101, an operating manner and a mode register are configured.

In an embodiment, a network processor (NP) performs configuration according to a desired operating manner and performs corresponding configuration on the mode register of a block control module in a transition module.

In step 1102, the NP performs recovered clock selection.

In an embodiment, the NP makes input lanes into CDR modules for recovered clock selection.

In step 1103, it is determined whether an operating mode is a gearbox mode. If the operating mode is the gearbox mode, step 1104 is performed, and if the operating mode is not the gearbox mode, step 1105 is performed.

In step S1104, a link synce module is configured to be in a straight-through state.

In an embodiment, through the straight-through state, output lanes passing through CDRs are directly subjected to synchronization processing.

In step 1105, the link synce module performs data block synchronization. The block synchronization is the block synchronization described in the above embodiment.

A header of a 66-bit block on a 10GBASE-R link is identified so that 10GBASE-R link synchronization is achieved, and then step 1106 is entered.

In step 1106, a block proc module determines whether a multiplexing mode is multiplexing of 40G and 10G Ethernet interfaces. If a multiplexing mode is multiplexing of 40G and 10G Ethernet interfaces, step 1107 is performed, and if a multiplexing mode is not multiplexing of 40G and 10G Ethernet interfaces, step 1108 is performed.

In step 1107, an operating mode of a synce proc module (i.e., the align proc module) is configured to be an align lock mode.

The align marker information is identified through the align lock mode, and preparation is made for subsequent alignment and reordering among lanes.

In step 1108, the synce proc module is configured to be in an align add mode.

The block control module configures the align proc module to be in an align add mode in which the align proc module inserts an align marker into a 10G input lane.

In step 1109, a lane deskew and reorder module performs synchronization and reordering on inputted messages according to the align marker.

In step 1110, a recovered clock is selected for FIFO rate adaptation.

The block control module selects the recovered clock of one input lane for FIFO rate adaptation according to the configuration.

In step 1111, a block distribute module performs data distribution.

In an embodiment, the block distribute module performs data distribution on the inputted data blocks, distributes inputted data blocks to lane x.y and lane x.(y+1) links for 10GBASE-R links, and distributes inputted data blocks to output lane x.y and lane (x+2).y for input lanes of 40G links.

In step 1112, a PMA module performs multiplexing according to a predetermined ratio.

The standard PMA module is used for multiplexing 20 input lanes according to a relationship of 20:4 in a polling manner, and a CAUI-4 interface is physically used for output.

In step 1113, transition is performed through an interface module for output.

The CAUI-4 interface outputted by the PMA transitions through the interface module to a corresponding 100G physical interface for output.

Through the above steps, the operating mode for sending the message may be determined after the message is received so that the message is correspondingly sent according to a multiplexing manner of Ethernet interfaces having the same granularity or different granularities and the received message is sent according to the determined operating mode, so that the message transmitted through the Ethernet interfaces having the same granularity or different granularities can be transmitted according to the corresponding operating mode without replacing a processing chip for transmitting the message with different granularities. In the embodiment, the same processing chip can be used for transmitting the message, solving the problem in the related art that a 100G MAC direct output 100G Ethernet interface and a 100G Ethernet interface multiplexed by 10G/40G low-speed Ethernet interfaces cannot be supported at the same time, and improving the message transmission efficiency.

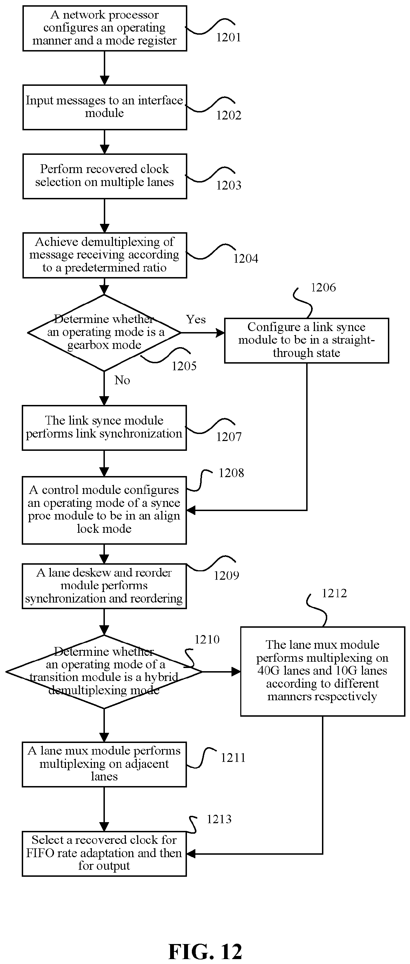

FIG. 12 is a schematic diagram of a message receiving method according to an embodiment. As shown in FIG. 12, the method includes the steps described below.

In step 1201, a network processor configures an operating manner and a mode register.

In an embodiment, the network processor (NP) performs configuration according to a desired operating manner and performs corresponding configuration on the mode register in a transition module.

In step 1202, messages are inputted to an interface module.

In an embodiment, an externally inputted 100G PMD interface transitions through the interface module to a CAUI-4 interface for input to a transition module.

In step 1203, recovered clock selection is performed on multiple lanes.

In an embodiment, multiple input lanes of the CAUI-4 interface enter CDR modules for recovered clock selection.

In step 1204, demultiplexing of the message receiving is achieved according to a predetermined ratio.

4:20 demultiplexing is performed on the output lanes through the PMA module. The demultiplexing process is the reverse of multiplexing, multiple input lanes are demultiplexed in turn from low to high onto lanes 0 to 19, and the rate of each lane is 5G.

In step 1205, it is determined whether an operating mode is a gearbox mode. If the operating mode is the gearbox mode, step 1206 is performed, and if the operating mode is not the gearbox mode, step 1207 is performed.

It is determined whether an operating mode of the transition module is the gearbox mode according to the mode register.

In step 1206, a link synce module is configured to be in a straight-through state.

The link synce module is configured to be in the straight-through state so that the lanes 0 to 19 demultiplexed by the PMA directly enter an align proc module.

In step 1207, the link synce module performs link synchronization.

The link synce module achieves synchronization of multiple lanes by identifying the headers of blocks on the multiple lanes of lanes 0 to 19.

In step 1208, a control module configures an operating mode of the synce proc module to be in an align lock mode.

The control module configures the operating mode of the synce proc module to be in the align lock mode for identifying an align marker, and preparation is made for subsequent alignment and reordering among lanes.

In step 1209, a lane deskew and reorder module performs synchronization and reordering.

In an embodiment, the lane deskew and reorder module performs synchronization and reordering on input lanes according to the align marker.

In step 1210, it is determined whether an operating mode of a transition module is a hybrid demultiplexing mode. If the operating mode of the transition module is the hybrid demultiplexing mode, step 1211 is performed, and if the operating mode of the transition module is not the hybrid demultiplexing mode, step 1212 is performed.

In step 1211, a lane mux module performs multiplexing on adjacent lanes.

In a 10*10GBASE-R demultiplexing mode, the lane mux module is configured to enable two adjacent lanes to be multiplexed in order, that is, lane 0.0 and lane 0.1 are multiplexed to lane 0; lane 1.0 and lane 1.1 are multiplexed to lane 1, and so on.

In step 1212, the lane mux module performs multiplexing on 40G lanes and 10G lanes according to different manners respectively.

In an embodiment, the lane mux module performs multiplexing on 40G lanes and 10G lanes according to different manners respectively: when the demultiplexing mode of one path of 40G plus six paths of 10G is configured, reordered lane 0.0 to lane 3.1 correspond to a 40GBASE-R link, lane 4.0 to lane 9.1 correspond to six 10GBASE-R links; when the demultiplexing mode of two paths of 40G plus two paths of 10G is configured, reordered lane 0.0 to lane 3.1 correspond to a first 40GBASE-R link, lane 4.0 to lane 7.1 correspond to a second 40GBASE-R link, and lane 8.0 to lane 9.1 correspond to two 10GBASE-R links.

In step 1213, a recovered clock is selected for FIFO rate adaptation.

In an embodiment, the control module selects the recovered clock of one among the four input lanes of the CAUI-4 for FIFO rate adaptation according to a configuration, and after completion, a CAUI-10 interface is formed for output to the NP module.

Through the above steps, the operating mode for receiving the message may be determined firstly, the message is received according to the determined operating mode, different Ethernet interfaces correspond to different operating modes, and the operating mode for receiving the message may be flexibly adjusted for receiving the message. A processing chip for transmitting the message with different granularities does not need to be replaced. In the embodiments of the present invention, the same processing chip can be used for transmitting the message, solving the problem in the related art that a 100G MAC direct output 100G Ethernet interface and a 100G Ethernet interface multiplexed by 10G/40G low-speed Ethernet interfaces cannot be supported at the same time, and improving the message transmission efficiency.

A data center switch is provided by another embodiment of the present application, and includes the message sending apparatus described in the above embodiments and/or the message receiving apparatus described in the above embodiments.

Apparently, those skilled in the art should know that various modules or steps described above of the present application may be implemented by a universal computing apparatus, the various modules or steps may be concentrated on a single computing apparatus or distributed in a network composed of multiple computing apparatuses. In an embodiment, the various modules or steps may be implemented by program codes executable by the computing apparatuses, so that they may be stored in a storage apparatus for execution by the computing apparatuses, and in some circumstances, the illustrated or described steps may be executed in sequences different from those described herein, or they may be made into various integrated circuit modules separately, or multiple modules or steps therein may be made into a single integrated circuit module for implementation. In this way, the present application is not limited to any specific combination of hardware and software.

The above are only embodiments of the present application and not intended to limit the present application.

### INDUSTRIAL APPLICABILITY

According to the present disclosure, the message transmitted through the Ethernet interfaces having different granularities or the same granularity can be transmitted through the corresponding operating mode, and the processing chip for transmitting the message with different granularities does not need to be replaced, so that the message can be transmitted through the same processing chip, and the message transmission efficiency is improved.

## Claims

1. A message sending method, comprising:
determining an operating mode for sending a message, wherein the operating mode is a mode for sending the message by using a multiplexing manner of one or more of following Ethernet interfaces: an Ethernet interface having a granularity of 10 Gigabit, G, 40G, or 100G; and
sending the message according to the determined operating mode.

2. The method of claim 1, wherein the determining the operating mode for sending the message comprises:
determining an operating mode configured by a network processor, NP, through an external interface as the operating mode for sending the message.

3. The method of claim 1 or 2, wherein the sending the message according to the determined operating mode comprises:
determining a clock data recovery manner for sending the message, and performing clock synchronization on the message to be sent according to the clock data recovery manner; and
sending the message subjected to the clock synchronization according to the operating mode.

4. The method of claim 1 or 2, wherein the sending the message according to the determined operating mode comprises:
determining a parameter for sending the message according to the determined operating mode; and
sending the message according to the parameter for sending the message.

5. The method of any one of claims 1 to 4, wherein the multiplexing manner of the one or more of the following Ethernet interfaces: the Ethernet interface having the granularity of 10G, 40G, or 100G comprises one of:
a manner of an independent 100G Ethernet interface; a multiplexing manner of two 40G Ethernet interfaces and two 10G Ethernet interfaces; a multiplexing manner of ten 10G Ethernet interfaces; or a multiplexing manner of one 40G Ethernet interface and six 10G Ethernet interfaces.

6. A message receiving method, comprising:
determining an operating mode for receiving a message, wherein the operating mode is a mode for receiving the message by using a multiplexing manner of one or more of following Ethernet interfaces: an Ethernet interface having a granularity of 10 Gigabit, G, 40G, or 100G; and
receiving the message according to the determined operating mode.

7. The method of claim 6, wherein the determining the operating mode for receiving the message comprises:
determining an operating mode configured by a network processor, NP, through an external interface as the operating mode for receiving the message.

8. The method of claim 6 or 7, wherein the receiving the message according to the determined operating mode comprises:
determining a clock data recovery manner for receiving the message, and performing clock synchronization on the received message according to the clock data recovery manner; and
receiving the message according to the operating mode.

9. The method of claim 6 or 7, wherein the receiving the message according to the determined operating mode comprises:
determining a parameter for receiving the message according to the determined operating mode; and
receiving the message according to the parameter for receiving the message.

10. The method of any one of claims 6 to 9, wherein the multiplexing manner of the one or more of the following Ethernet interfaces: the Ethernet interface having the granularity of 10G, 40G, or 100G comprises one of:
a manner of an independent 100G Ethernet interface; a multiplexing manner of two 40G Ethernet interfaces and two 10G Ethernet interfaces; a multiplexing manner of ten 10G Ethernet interfaces; or a multiplexing manner of one 40G Ethernet interface and six 10G Ethernet interfaces.

11. A message sending apparatus, comprising:
a first determining module, which is configured to determine an operating mode for sending a message, wherein the operating mode is a mode for sending the message by using a multiplexing manner of one or more of following Ethernet interfaces: an Ethernet interface having a granularity of 10 Gigabit, G, 40G, or 100G; and
a sending module, which is configured to send the message according to the determined operating mode.

12. The apparatus of claim 11, wherein the first determining module comprises:
a first determining unit, which is configured to determine an operating mode configured by a network processor, NP, through an external interface as the operating mode for sending the message.

13. A message receiving apparatus, comprising:
a second determining module, which is configured to determine an operating mode for receiving a message, wherein the operating mode is a mode for receiving the message by using a multiplexing manner of one or more of following Ethernet interfaces: an Ethernet interface having a granularity of 10 Gigabit, G, 40G, or 100G; and
a second receiving module, which is configured to receive the message according to the determined operating mode.

14. The apparatus of claim 13, wherein the second determining module comprises:
a second determining unit, which is configured to determine an operating mode configured by a network processor, NP, through an external interface as the operating mode for receiving the message.

15. A data center switch, comprising the message sending apparatus of claim 11 or 12 and/or the message receiving apparatus of claim 13 or 14.

16. A storage medium, comprising a stored program, wherein the program is configured to perform the message sending method of any one of claims 1 to 5.

17. A processor, which is configured to execute a program, wherein the program, when executed, is configured to perform the message sending method of any one of claims 1 to 5.
